# FASCICULE DE BREVET EUROPEEN

(11) **EP 0 645 542 B1**
(45) Date de publication et mention de la délivrance du brevet: **18.12.1996**
(21) Numéro de dépôt: 94402112.0
(22) Date de dépôt: 22.09.1994
(51) Int. Cl.: F04D 25/08, F04D 25/06

(54) **Groupe motoventilateur à moyeu perfectionné**
Kraftfahrzeuglüfter mit Nabe
Automobile engine fan and hub

(30) Priorité: 24.09.1993 FR 9311418
(43) Date de publication de la demande: 29.03.1995
(73) Titulaire: ECIA - EQUIPEMENTS ET COMPOSANTS POUR L'INDUSTRIE AUTOMOBILE, F-25400 Audincourt (FR)
(72) Inventeur: Rudi, Alain, F-90850 Essert (FR)
(74) Mandataire: Polus, Camille

(56) Documents cités:
- EP-A- 0 488 961
- DE-A- 4 127 134
- FR-A- 2 651 933
- GB-A- 1 060 926
- GB-A- 1 113 850
- US-A- 3 385 516

## Description

La présente invention concerne les groupes motoventilateurs et, plus particulièrement, ceux qui sont utilisés à bord des véhicules automobiles en association notamment avec un échangeur thermique tel que le radiateur de l'équipement de refroidissement du moteur thermique. L'invention a plus particulièrement pour objet un groupe motoventilateur à moyeu d'hélice perfectionné.

Les groupes motoventilateurs habituellement utilisés à bord des véhicules automobiles en association avec un radiateur, sont constitués le plus souvent d'un moteur électrique logé à l'intérieur d'une hélice, dans la partie centrale de cette dernière désignée habituellement par le mot "bol". Ce bol de l'hélice est fixé sur l'arbre du moteur qui l'entraîne et porte, à sa périphérie, l'emplanture des pales plus particulièrement leurs pieds, qui alimentent en air forcé le radiateur.

Des exemples de l'état de la technique sont, par exemple, illustrés par les documents FR-A-2 651 933 et FR-A-2 660 124 auxquels on pourra se reporter utilement pour plus amples informations.

Les moteurs électriques utilisés sont souvent du type à aimants permanents et à commutation électronique. Ces moteurs sont tels que le stator porte les circuits électroniques y compris les composants de puissance de ces derniers, ainsi que les tôles et les bobinages de l'induit alors que le rotor porte la culasse et les aimants et tourne avec l'hélice qu'il porte par l'intermédiaire de son bol.

Pour un tel type de groupe motoventilateur, on constate que le moteur électrique est très mal refroidi alors qu'il est important d'évacuer les calories qu'il produit pour ne pas voir son rendement décliner rapidement par suite d'une baisse de performance des aimants permanents qui s'échauffent et par suite de l'augmentation de la résistance des fils des bobinages qui sont traversés par une intensité de l'ordre d'une vingtaine d'ampères puisque ces moteurs, souvent d'une puissance de l'ordre de 250 W à 350 W, sont généralement alimentés à partir de l'accumulateur ou de la batterie du véhicule qui délivre classiquement actuellement une tension de 12 V.

On observera aussi que le bol de l'hélice est fixé sur un arbre de relativement petit diamètre, ce qui a l'inconvénient de soumettre le matériau du bol, à proximité de l'arbre, à des contraintes notamment de torsion, importantes.

La fixation du bol de l'hélice sur l'arbre dans de telles conditions, augmente aussi l'encombrement axial du groupe motoventilateur. Ceci présente un handicap non négligeable lorsqu'on sait que le volume disponible entre le radiateur et ce qui l'entoure, par exemple la calandre du véhicule, est des plus restreint et, souvent, à partager avec d'autres équipements par exemple nécessaires au refroidissement des climatiseurs de l'habitacle ou des boîtes de vitesses automatiques de la transmission.

Le but de l'invention est de construire un groupe motoventilateur à moyeu d'hélice perfectionné qui ne présente pas les inconvénients rappelés brièvement auparavant.

L'invention a pour objet un groupe motoventilateur à hélice dont les pieds des pales sont portés par un moyeu associé au rotor d'un moteur dont le stator porte l'arbre sur lequel tourne le rotor. Le groupe motoventilateur selon l'invention est remarquable en ce que le moyeu qui a des faces intérieure et extérieure comprend un noyau avec un alésage qui est destiné à recevoir l'arbre et avec des évents qui transpercent le noyau de part en part et qui sont séparés par des bras, un voile avec un entonnoir central qui est transpercé par des ouïes qui sont séparées par des branches et qui sont encadrées par des aubes placées sur les deux faces intérieure et extérieure opposées du voile et avec une couronne portant à sa périphérie et sur sa face intérieure des ailettes radiales, et un anneau axial portant les pieds des pales sur la face extérieure.

D'autres caractéristiques de l'invention apparaîtront à la lecture de la description et des revendications qui suivent ainsi qu'à l'examen du dessin annexé, donné seulement à titre d'exemple où:

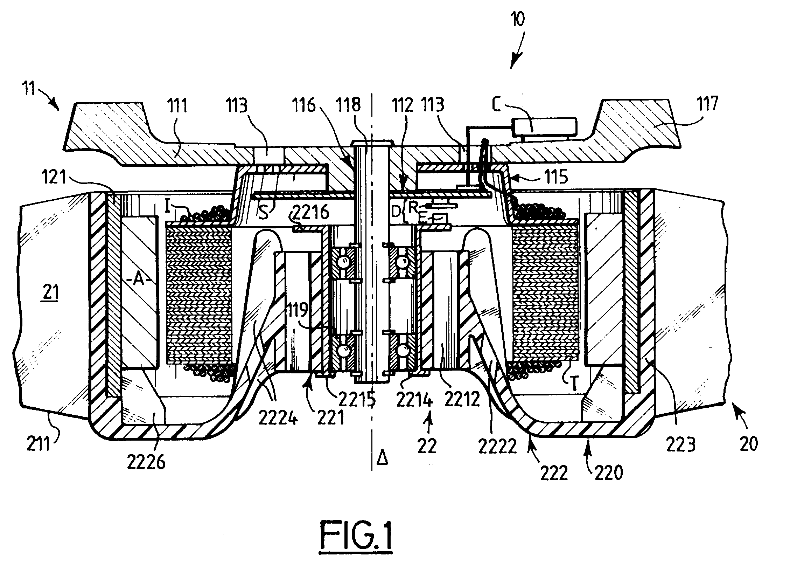

- la Figure 1 est une coupe méridienne axiale d'un mode de réalisation d'un groupe motoventilateur à moyeu d'hélice perfectionné selon l'invention;

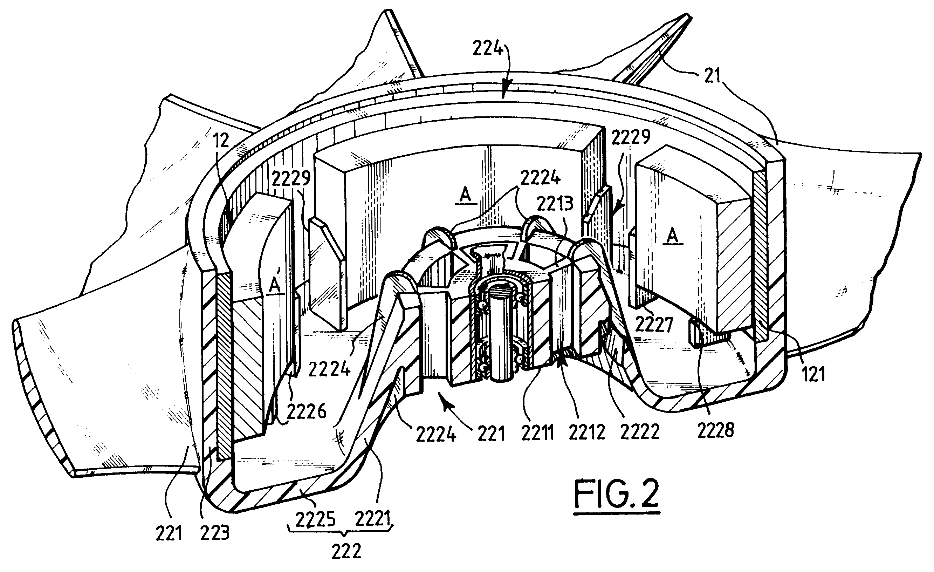

- la Figure 2 est une vue perspective partielle avec écorché local du mode de réalisation, de la Figure 1;

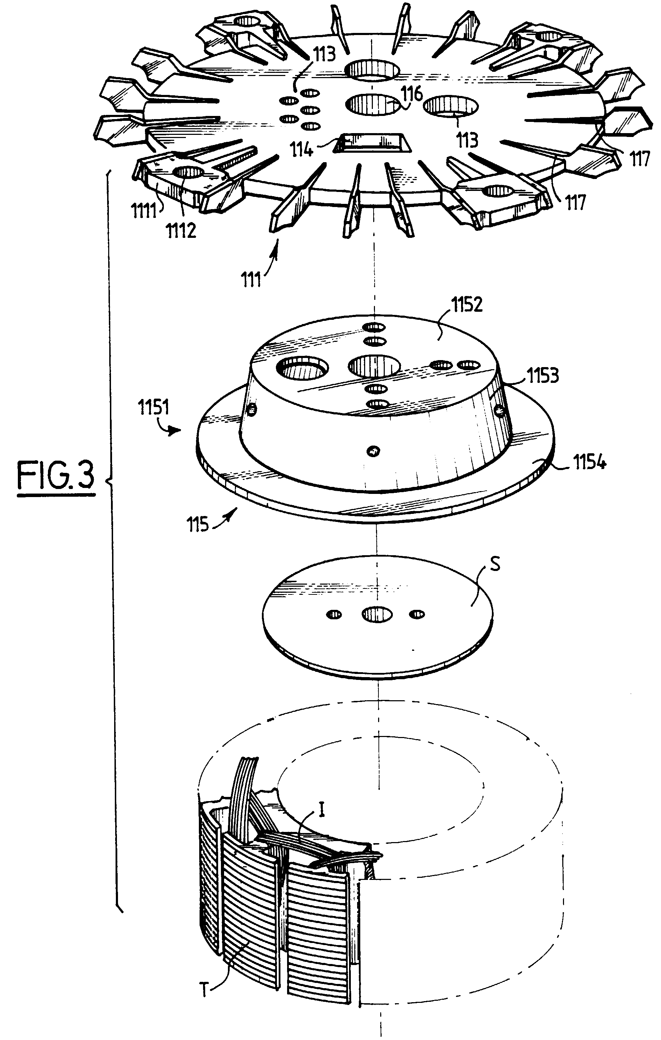

- la Figure 3 est une vue perspective partielle éclatée du mode de réalisation de la Figure 1; et
- la Figure 4 est une vue analogue à celle de la Figure 1 d'une variante d'exécution.

Les moteurs électriques à courant continu ainsi que les hélices, de même que les groupes motoventilateurs installés à bord des véhicules automobiles notamment terrestres étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un mode de réalisation d'un groupe motoventilateur à moyeu d'hélice perfectionné selon l'invention avant d'en exposer au besoin la fabrication, le montage et le fonctionnement.

Comme on le voit en examinant les figures du dessin, un groupe motoventilateur à moyeu d'hélice perfectionné selon l'invention comprend, notamment, un moteur 10 et une hélice 20 entraînée par le moteur pour tourner selon un axe Δ.

Le moteur 10 comprend un stator 11 et un rotor 12.

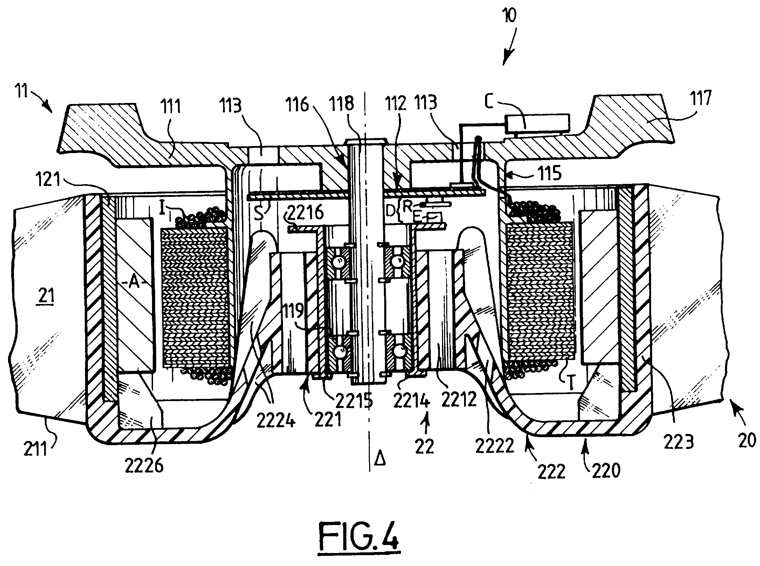

Comme on le voit, le stator 11 comprend un flasque 111 avec des bras 1111 destinés à recevoir des moyens de fixation comprenant par exemple des trous 1112 pour son montage sur un véhicule, comme il est classique. Un support 112 tel des plots ou similaires, est destiné à recevoir un substrat S d'un circuit imprimé qui comprend des composants électroniques tels des composants C de puissance notamment du circuit d'alimentation du moteur. De préférence, les composants de puissance sont fixés mécaniquement, de toute manière appropriée classique, sur le flasque 111 en particulier sur sa face extérieure pour assurer un bon transfert thermique, et ils sont reliés électriquement au circuit imprimé du substrat sur lequel sont implantés d'autres composants électriques et/ou électroniques notamment pour petits signaux et similaires. Des orifices 113, simples ou multiples, servent à la traversée des fils de jonction et/ou de raccordement des composants électroniques en particulier des composants de puissance C et des bobinages I de l'induit. Un passage 114 permet de placer un bornier de tout type courant classique, pour le raccordement du groupe motoventilateur à une source d'énergie électrique telle que la batterie ou accumulateur du véhicule. Une embase 115 est destinée à recevoir, comme il est connu, les tôles T de l'induit dans les dégagements habituels desquelles sont placés les bobinages I de l'induit. Comme on le voit, selon une solution l'embase 115 se présente à la manière d'un fourreau 1150 faisant partie intégrante du flasque (Figure 4). Selon une autre solution, l'embase 115 se présente à la manière d'une cuvette 1151 rapportée sur le flasque et fixée sur ce dernier de toute manière appropriée connue par exemple vissage, rivetage, soudage, collage. Comme on le voit, le fond 1152 de la cuvette est fixé sur le flasque et se prolonge par une paroi 1153 par exemple cylindrique ou conique, qui se termine par un rebord 1154 annulaire pratiquement parallèle au fond. Sur ce bord sont fixées, de toute manière classique, les tôles de l'induit par exemple à l'aide de tirants ou similaires non illustrés. Un logement 116 est destiné à recevoir un arbre 118 qui porte au moins un palier 119 lisse ou fait par exemple d'un roulement à billes ou similaire. Des nervures 117 font saillie sur l'une au moins des faces du flasque et à sa périphérie, pour servir de radiateur et évacuer ou dissiper les calories produites par les composants électroniques et/ou les bobinages de l'induit. Le profil des nervures 117 ainsi que leurs dimensions et répartition, sont choisis en fonction de la nature du matériau dont est fait le flasque ainsi que de la quantité de chaleur à évacuer dans l'ambiance normale dans laquelle le moteur fonctionne.

Le rotor 12 comprend une culasse ferromagnétique par exemple en forme de manchon 121 sur la surface intérieure de laquelle sont placés et retenus, dans les positions appropriées, des aimants A permanents, à l'aide de toute technique classique telle que colle ou agrafes ou autre.

L'hélice 20 comprend des pales 21 dont les emplantures ou pieds 211 sont portés par un moyeu 22.

Le moyeu 22 qui présente des faces 220 intérieure et extérieure, comprend un noyau 221 de configuration générale cylindrique avec un alésage 2211 qui est destiné à recevoir l'arbre 118. Le noyau est traversé, de part en part, par des évents 2212 qui sont séparés par des bras 2213 radiaux. Comme on le voit sur les figures du dessin, les évents sont de préférence orientés parallèlement à l'axe Δ et disposés selon un cercle centré sur l'axe et régulièrement répartis. S'il y a lieu, l'alésage 2111 est muni d'une chemise 2214 intérieure dans laquelle sont logés les paliers de l'arbre qui supportent le moyeu. Cette chemise à surface extérieure de préférence rugueuse est, par exemple, maintenue en place dans l'alésage et retient un palier par des pattes 2215 en créneaux repliées alternativement dans un sens et dans l'autre, comme illustré. Pour les raisons qui apparaîtront par la suite, cette chemise est aussi munie d'un méplat 2216 radial. Le moyeu 22 comprend aussi un voile 222. Comme on le voit, le voile 222 comprend un entonnoir 2221 central et une couronne 2225 périphérique. L'entonnoir central 2221 est transpercé par des ouïes 2222 qui sont séparées par des branches 2223 et qui sont encadrées par des aubes 2224 placées sur les deux faces intérieure et extérieure opposées du voile. Comme on peut l'observer, les ouïes sont disposées selon un cercle centré sur l'axe et concentrique au cercle des ouïes, et sont de préférence régulièrement distribuées de manière à être en outre de préférence décalées et en quinconce avec les ouïes. La couronne 2225 porte à sa périphérie et sur sa face intérieure des ailettes 2226 radiales. Les ailettes 2226, comme on le voit, ont des longueurs axiales différentes et les ailettes longues et les ailettes courtes sont intercalées. On observera que ces ailettes sont réparties régulièrement sur la couronne et que le pas des ailettes longues est plus grand que le pas des ailettes courtes pour les raisons qui apparaîtront par la suite. Comme on le voit, chaque ailette 2226 est délimitée par deux flancs 2227 radiaux, un bout 2226 axial et un bord 2229 périphérique. Le moyeu 22 comprend aussi un anneau 223 axial dont la surface intérieure délimite avec les bords périphériques 2229 des ailettes 2226 une chambre 224. Comme on le voit en examinant les figures du dessin, les bouts 2228 des ailettes courtes servent de butées longitudinales aux aimants A et les flancs 2227 en regard de deux ailettes 2226 longues successives servent de cale angulaire aux aimants. La chambre 224 est destinée à recevoir le manchon 121 de la culasse et lui sert d'arrêtoir axial pour fixer sa position longitudinale dans le moyeu. Le manchon est retenu en place par exemple par coincement.

Un détecteur de rotation D ou codeur angulaire, avec un émetteur E et un récepteur R tels que par exemple au moins un aimant approprié porté par le méplat 2216 de la chemise 2214 et au moins une sonde à effet Hall montée sur le substrat S respectivement, permet de piloter et d'asservir la distribution du courant dans les bobinages de l'induit afin d'engendrer un champ tournant que suivent les aimants permanents pour mettre en rotation le rotor et donc l'hélice. Ceci est classique. Il est clair qu'on peut aussi utiliser un codeur angulaire optique, reluctant ou analogue.

Tous les constituants d'un groupe motoventilateur à moyeu d'hélice perfectionné selon l'invention sont fabriqués dans des matériaux traditionnels, travaillés, usinés et mis en forme selon des techniques classiques convenables appropriées.

Le flasque 111 avec ses nervures est, par exemple, fait en un alliage métallique à base d'aluminium tel que du ZAMAC moulé. L'hélice avec ses pales et son moyeu, est, par exemple, faite en une résine synthétique mise en forme par exemple par moulage par injection. S'il y a lieu cette résine reçoit des charges et/ou des renforts par exemple en fibres de verre, pour lui conférer les propriétés mécaniques et/ou thermiques recherchées.

Tous les constituants d'un groupe motoventilateur à moyeu d'hélice perfectionné selon l'invention sont rassemblés, réunis, montés et assemblés comme cela ressort clairement des figures du dessin.

On voit que grâce à la configuration donnée au moyeu, le groupe motoventilateur se comporte, en quelque sorte, aussi comme une turbine aspirante centrifuge. De l'air extérieur est prélevé et introduit à l'intérieur en traversant les évents du noyau et les ouïes de l'entonnoir. Cet air aspiré par les aubes extérieures est ensuite refoulé à la périphérie par les aubes intérieures et les ailettes et forcé dans les entrefers des aimants et dans l'interstice existant entre les tôles de l'induit et les aimants. Cet air qui s'est ainsi réchauffé est finalement refoulé à l'extérieur et évacué en passant entre les nervures du flasque et l'anneau qui porte les pieds des pales.

On voit que les contraintes dues au couple de rotation sont réduites puisque maintenant l'entraînement de l'hélice ne se fait plus à proximité de l'arbre mais à l'écart de l'axe de rotation par le manchon de la culasse proche des pieds des pales.

Outre ceci, on voit que l'encombrement longitudinal du groupe motoventilateur a été réduit puisqu'on a diminuer l'interface moyeu d'hélice-carter du rotor du moteur qui pris sa plus simple expression.

On observera aussi que du fait d'une telle structure, les aubes et ailettes de même que les bras et branches servent de renforts qui contribuent à augmenter la rigidité du moyeu. On observera en outre que du fait que l'arbre n'a plus aucun rôle actif dans la transmission du couple moteur à l'hélice, celui-ci sert uniquement de support mécanique pour définir l'axe de rotation et peut donc être réduit en conséquence comme il en est du nombre et de l'importance des pièces ferromagnétiques. Ceci résulte en particulier du fait que l'on a mis à profit le peu d'efficacité aérodynamique de la partie centrale des pales qui ont été éliminées et remplacées par le moyeu rotor turbine selon l'invention.

La forme, la configuration, l'orientation et la répartition des aubes, ailettes, ouïes et évents sont choisies en fonction des caractéristiques et performances du groupe motoventilateur à moyeu perfectionné selon l'invention.

Le nombre des aimants, des bobinages et leur imbrication sont choisis en fonction de l'architecture électrotechnique du moteur. On observera toutefois que le fait que les branchements et raccordements sont, au moins pour partie, réalisés sur la face extérieure du flasque, ceci facilite les opérations de câblage et de vérification en usine au cours de la fabrication ou ultérieurement au cours de l'entretien ou de la réparation.

Un groupe motoventilateur à moyeu perfectionné selon l'invention se prête particulièrement bien à une fabrication automatisée à l'aide de robots et/ou d'automates.

Ce qui précède montre l'intérêt de l'invention et tous les avantages qu'elle procure.

## Revendications

1. Groupe motoventilateur à hélice dont les pieds des pales sont portés par un moyeu associé au rotor d'un moteur dont le stator porte l'arbre sur lequel tourne le rotor, caractérisé en ce que le moyeu (22) qui a des faces (220) intérieure et extérieure comprend un noyau (221) avec un alésage (2211) qui est destiné à recevoir l'arbre et avec des évents (2212) qui transpercent le noyau (221) de part en part et qui sont séparés par des bras (2213), un voile (222) avec un entonnoir (2221) central qui est transpercé par des ouïes (2222) qui sont séparées par des branches (2223) et qui sont encadrées par des aubes (2224) placées sur les deux faces (220) intérieure et extérieure opposées du voile et avec une couronne (2225) portant à sa périphérie et sur sa face intérieure des ailettes (2226) radiales, et un anneau (223) axial portant les pieds (211) des pales (21) sur sa face extérieure.

2. Groupe selon la revendication 1, caractérisé en ce que les évents (2212) et les ouïes (2222) sont disposés selon deux cercles concentriques et sont décalés.

3. Groupe selon la revendication 1 ou 2, caractérisé en ce que les ailettes (2226) ont des longueurs axiales différentes, les ailettes longues et les ailettes courtes étant intercalées.

4. Groupe selon la revendication 3, caractérisé en ce que les ailettes (2226) sont réparties périodiquement sur la couronne (2225) et en ce que le pas des ailettes longues est plus grand que le pas des ailettes courtes.

5. Groupe selon la revendication 4 où le moteur est à aimants permanents, caractérisé en ce que chaque ailette (2226) est délimitée par deux flancs (2227) radiaux et un bout (2228) axial, en ce que les bouts (2228) des ailettes courtes servent de butée longitudinale aux aimants et les flancs (2227) en regard de deux ailettes (2226) longues successives servant de cale angulaire aux aimants.

6. Groupe selon la revendication 4 ou 5 où le moteur est à aimants permanents portés par une culasse ferromagnétique en manchon, caractérisé en ce que chaque ailette (2226) est délimitée par un bord (2229) périphérique et en ce que ces bords périphériques (2229) et l'anneau (223) délimitent ensemble une chambre (224) pour le manchon (121) de la culasse.

7. Groupe selon l'une quelconque des revendications 1 à 6, caractérisé en ce que l'alésage (2211) du noyau (221) est munie d'une chemise (2214) intérieure pour recevoir l'arbre (118) par l'entremise d'au moins un palier (119).

8. Groupe selon l'une quelconque des revendications 1 à 7, caractérisé en ce que le stator (11) comprend un flasque (111) avec un logement (116) central pour l'arbre (118) et avec des nervures (117) périphériques saillantes servant de radiateur.

9. Groupe selon la revendication 8, caractérisé en ce que le flasque (111) comprend, entre logement (116) et nervures (117), une embase (115) destinée à recevoir les tôles de l'induit.

10. Groupe selon la revendication 9, caractérisé en ce que l'embase (115) fait corps avec le flasque (111).

11. Groupe selon la revendication 9, caractérisé en ce que l'embase (115) est rapportée sur le flasque (111).

12. Groupe selon l'une quelconque des revendications 7 à 11, caractérisé en ce que la chemise (2214) porte un détecteur (D) de rotation pour commander l'alimentation des bobinages de l'induit.

## Patentansprüche

1. Lüftergebläse mit einem Propeller, dessen Schaufelfüße von einer Nabe getragen werden, welche mit dem Rotor eines Motors verbunden ist, dessen Stator die Welle trägt, auf der sich der Rotor dreht,
**dadurch gekennzeichnet, daß**
die Nabe (22), welche mit inneren und äußeren Flächen (220) ausgestattet ist, einen Kern (221) mit einem Innengewinde (2211) enthält, welches die Welle aufnimmt, sowie Entlüftungslöcher (2212) aufweist, welche den Kern (221) komplett durchqueren und mit Hilfe von Armen (2213) voneinander getrennt sind, und daß vorgesehen ist, welcher von Ansaugöffnungen (2222) durchquert wird, die durch Schenkel (2223) untereinander abgetrennt sind und die von Schaufeln (2224) umgeben werden, welche auf den beiden gegenüberliegenden Innen- und Außenseiten (220) der Abdeckung plaziert sind, und daß ein Kranz (2225) vorgesehen ist, welcher an seiner Peripherie und an seiner Innenseite radiale Fleier (2226) trägt, und daß ein axialer Ring (223) vorgesehen ist, welcher an seiner Außenseite die Fußteile (211) der Schaufeln (21) trägt.

2. Lüftergebläse nach Anspruch 1,
**dadurch gekennzeichnet, daß**
die Entlüftungslöcher (2212) und die Ansaugöffnungen (2222) auf zwei konzentrischen Kreisen versetzt angeordnet sind.

3. Lüftergebläse nach einem der Ansprüche 1 oder 2,
**dadurch gekennzeichnet, daß**
die Fleier (2226) unterschiedliche axiale Längen aufweisen, wobei lange und kurze Fleier abwechselnd angeordnet sind.

4. Lüftergebläse nach Anspruch 3,
**dadurch gekennzeichnet, daß**
die Fleier (2226) periodisch über den Kranz (2225) verteilt sind und daß die Ganghöhe der langen Fleier größer ist, als die Ganghöhe der kurzen Fleier.

5. Lüftergebläse nach Anspruch 4, bei dem der Motor mit Dauermagneten ausgestattet ist,
**dadurch gekennzeichnet, daß**
jeder der Fleier (2226) durch zwei radiale Flanken (2227) und ein axiales Endteil (2228) eingegrenzt wird und daß die Endteile (2228) der kurzen Fleier als Längsbegrenzungen für die Magneten dienen und die Flanken (2227) gegenüber zwei aufeinanderfolgenden langen Fleiern (2226) als Winkelpaßstück für die Magneten dienen.

6. Lüftergebläse nach einem der Ansprüche 4 oder 5, bei dem der Motor mit Dauermagneten ausgestattet ist, welche von der Manschette eines ferromagnetischen Poljochs getragen werden,
**dadurch gekennzeichnet, daß**
jeder der Fleier (2226) von einer peripheren Einfassung (2229) eingegrenzt wird, und daß diese peripheren Einfassungen (2229) zusammen mit dem Ring (223) eine Kammer (224) für die Manschette (121) des Poljochs bilden.

7. Lüftergebläse nach einem der Ansprüche 1 bis 6,
**dadurch gekennzeichnet, daß**
das Innengewinde (2211) des Kerns (221) mit einem Gewindeeinsatz (2214) ausgestattet ist, um die Welle (118) mindestens mit Hilfe eines Lagers (119) aufzunehmen.

8. Lüftergebläse nach einem der Ansprüche 1 bis 7,
**dadurch gekennzeichnet, daß**
der Stator (11) einen Flansch (111) mit einem zentralen Sitz (116) für die Welle (118) aufweist und mit peripher hervorstehenden Rippen (117) ausgestattet ist, welche als Radiator dienen.

9. Lüftergebläse nach Anspruch 8,
**dadurch gekennzeichnet, daß**
der Flansch (111) zwischen dem Sitz (116) und den Rippen (117) eine Befestigungsfläche (115) aufweist, welche die Ankerschnitte des Ankers trägt.

10. Lüftergebläse nach Anspruch 9,
**dadurch gekennzeichnet, daß**
die Befestigungsfläche (115) zusammen mit dem Flansch (111) einen einzigen Körper bildet.

11. Lüftergebläse nach Anspruch 9,
**dadurch gekennzeichnet, daß**
die Befestigungsfläche (115) an den Flansch (111) angesetzt ist.

12. Lüftergebläse nach einem der Ansprüche 7 bis 11,
**dadurch gekennzeichnet, daß**
der Gewindeeinsatz (2214) einen Rotationsdetektor D trägt, um die Versorgung der Wicklungen des Ankers zu steuern.

## Claims

1. Engine propeller fan assembly of which the blade shanks are borne by a hub associated with the rotor of a motor of which the stator bears the shaft on which the rotor turns, characterised in that the hub (28) which has internal and external faces (220) comprises a core (221) with a bore (2211) which is intended to receive the shaft and with vents (22l2) which pierce the core (221) right through and are separated by arms (2213), a web (222) with a central funnel (2221) which is pierced by inlets (2222) which are separated by branches (2223) and are enclosed by vanes (2224) placed on the two opposing internal and external faces (220) of the web and with a ring (2225) bearing radial fins (2226) on its periphery and on its internal face, and an axial rim (223) bearing the shanks (211) of the blades (21) on its external face.

2. Assembly as claimed in Claim 1, characterised in that the vents (2212) and the inlets (2222) are disposed in two concentric circles and are staggered.

3. Assembly as claimed in Claim 1 or 2, characterised in that the fins (2226) have different axial lengths, the long fins and the short fins being interspersed.

4. Assembly as claimed in Claim 3, characterised in that the fins (2226) are distributed at intervals over the ring (2225) and that the pitch of the long fins is greater than the pitch of the short fins.

5. Assembly as claimed in Claim 4 in which the motor is one with permanent magnets, characterised in that each fin (2226) is delimited by two radial flanks (2227) and an axial end (2228), that the ends (2228) of the short fins serve as a longitudinal stop for the magnets and the opposing flanks (2227) of two successive long fins (2226) serve as an angular block for the magnets.

6. Assembly as claimed in Claim 4 or 5 in which the motor is one with permanent magnets borne by a sheathed ferromagnetic yoke, characterised in that each fin (2226) is delimited by a peripheral edge (2229) and that these peripheral edges (2229) and the rim (223) together delimit a chamber (224) for the sheath (121) of the yoke.

7. Assembly as claimed in any one of Claims 1 to 6, characterised in that the bore (2211) of the core (221) is provided with an internal liner (2214) to receive the shaft (118) with at least one bearing (119) interposed.

8. Assembly as claimed in any one of Claims 1 to 7, characterised in that the stator (11) comprises a flange (111) with a central housing (116) for the shaft (118) and with projecting peripheral ribs (117) which serve as a radiator.

9. Assembly as claimed in Claim 8. characterised in that the flange (11) comprises, between the housing (116) and the ribs (117), a seating (115) intended to receive the plates of the armature.

10. Assembly as claimed in Claim 9, characterised in that the seating (115) is integral with the flange (111).

11. Assembly as claimed in Claim 9, characterised in that the seating (115) is attached to the flange (11).

12. Assembly as claimed in any one of Claims 7 to 11, characterised in that the liner (2214) bears a rotation detector (D) to control the power supply to the windings of the armature.
